# EUROPEAN PATENT APPLICATION

(11) **EP 1 510 707 A2**
(43) Date of publication of application: **02.03.2005**
(21) Application number: 04254766.1
(22) Date of filing: 06.08.2004
(51) Int. Cl.: F16C 19/36

(54) **Tapered roller bearing for automobile transmission**

(30) Priority: 28.08.2003 JP 2003304686
(71) Applicant: NTN CORPORATION, Osaka-shi, Osaka-fu (JP)
(72) Inventor: Tsujimoto, Takashi, Iwata-shi Shizuoka-ken (JP)
(74) Representative: White, Duncan Rohan

(57) **Abstract**

A tapered roller bearing for an automobile transmission is provided, which is capable of preventing very early occurrence of surface originating flaking even when loss in pre-load has occurred under severe lubricating conditions. The tapered roller bearing is constructed such that the maximum contact pressure on a raceway surface (1, 3) is kept less than 3000 Mpa under a condition where loss in pre-load has occurred.

## Description

### BACKGROUND OF THE INVENTION

### 1. Field of the Invention

The present invention relates to a tapered roller bearing for an automobile transmission.

### 2. Description of the Related Art

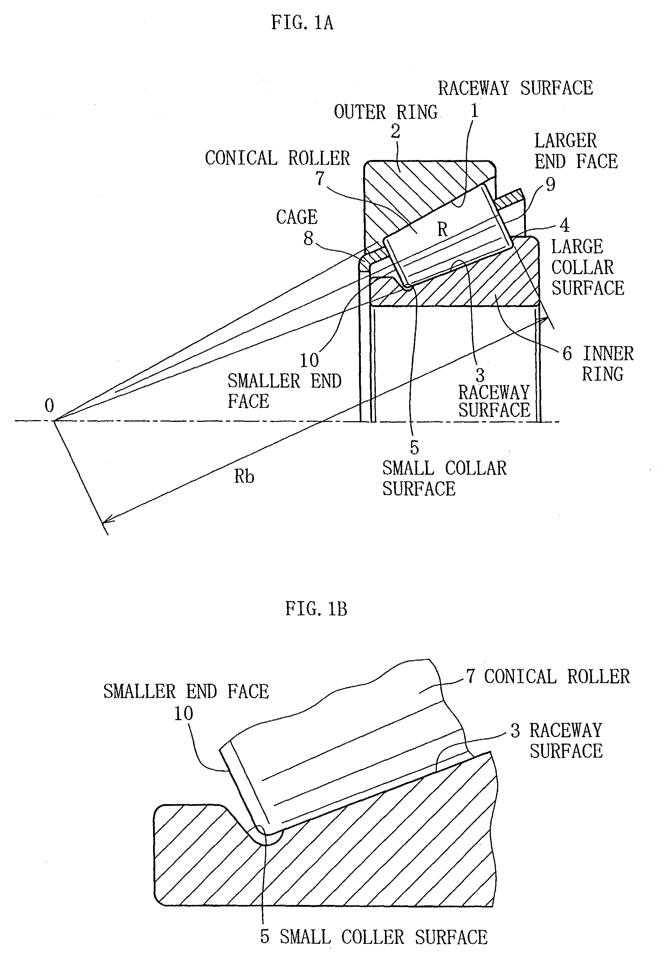

A tapered roller bearing is used in a shaft support part of the input/output shaft of an automobile transmission. This tapered roller bearing, for example, as shown in Fig. 1, comprises an outer ring 2 having a tapered raceway surface 1, an inner ring 6 having a tapered raceway surface 3 and provided with a large rib surface 4 on the larger diameter side of the raceway surface 3 and with a small rib surface 5 on the smaller diameter side thereof, a plurality of tapered rollers 7 which are rollably arranged between the raceway surfaces 1 and 3 of the outer ring 2 and the inner ring 6, and a cage 8 which holds the tapered rollers 7 such that they are arranged at predetermined even intervals in the circumferential direction. The distance between the large rib surface 4 and the small rib surface 5 of the inner ring 6 is designed to be slightly longer than the length of the tapered roller 7.

Each of the tapered rollers 7 is designed such that it makes line contact with the raceway surfaces 1 and 3 of the outer ring 2 and the inner ring 6, and the vertexes of the respective cone angles of the tapered roller 7 and the raceway surfaces 1 and 3 match at a single point O on the center line of the tapered roller bearing. Thereby, the tapered roller bearings 7 are enabled to perform rolling movement along the raceway surfaces 1 and 3.

Since the raceway surfaces 1 and 3 of the tapered roller bearing have different cone angles, the resultant of the loads applied to the tapered rollers 7 from the raceway surfaces 1 and 3 acts in the direction to push the tapered roller 7 to the side of the large rib surface 4 of the inner ring 6. Therefore, during the operation of the bearing, each of the tapered rollers 7 is guided with its larger end face 9 pressed against the large rib surface 4, so that the larger end face 9 makes slide contact with the large rib surface 4. On the other hand, since the distance between the large rib surface 4 and the small rib surface 5 of the inner ring 6 is slightly longer than the length of the tapered roller 7, as shown in the enlarged view of Fig. 1(b), the small rib surface 5 does not make contact with the smaller end face 10 of the tapered roller 7, and there is a small clearance therebetween. The small rib surface 5 is constituted by a plane slightly inclined outward with respect to the smaller end face 10 of the tapered roller 7.

Pre-load is exerted axially to the tapered roller bearing for the purpose of preventing, during the operation thereof, the tapered roller 7 from moving in the axial direction and assuring that the tapered rollers 7 makes stable line contact with the respective raceway surfaces 1 and 3 of the outer and inner rings 2 and 6.

However, if so-called "galling" occurs on the rib surface due to a metal-to-metal contact between the large rib surface 4 and the larger end face 9 of the tapered roller 7 during use of the tapered roller bearing and due to a contact between the large rib surface 4 and the edge of the larger end face 9 during skewing of the tapered roller 7, this will cause a phenomenon called "loss in pre-load" where the pre-load drops gradually.

When the relationship between the pre-load and the life of the bearing is represented by a life ratio (L/L₀) (where L denotes a life when the clearance and pre-load are taken into consideration, and L₀ denotes a life when the clearance is zero), the life ratio (L/L₀) is 1 or more if there is exerted an appropriate magnitude of pre-load (when the axial clearance is in a negative range). However, when the axial clearance becomes zero and enters into a positive range, the loss in pre-load occurs and the life ratio drops gradually.

### (Control of Edge Stress)

For a conventional tapered roller bearing for an automobile transmission, it is necessary to consider possible assemble errors such as an error in relative slope angle (misalignment) between the inner and outer rings and to take measures for making it possible to prevent the decrease of bearing lifetime due to edge stress produced by such assemble errors, even under maximum load conditions. For example, crowning is provided on the raceway surface 1 or 3, or on the outer peripheral surface of the tapered rollers so that the occurrence of large edge stress can be prevented, allowing a certain degree of assemble error. Alternatively, the internal design of the bearing (diameter, length, and number of rollers) is devised to suppress the edge stress. The larger the crowning is, the more effectively the edge stress can be suppressed. However, the increase of crowning size (that means decrease of curvature radius) decreases the contact area between the tapered roller and the raceway surface and hence increases the maximum contact pressure. Therefore, it is a common practice to select a moderate value for the crowning size. It can be said that, conventionally, the crowning size is designed by a method in which the upper limit of edge stress is determined in the first place, and then the crowning size is determined by calculating back the same from this upper limit using a predetermined formula.

### (Surface Originating Flaking)

On the other hand, there recently has been a trend that a low-viscosity oil is used for automobile transmissions for realizing automatic transmissions, CVTs, fuel economy, and so forth. If, in the environment where a low-viscosity oil is used, unfavorable conditions such as (1) high oil temperature, (2) low oil flow rate, (3) occurrence of loss in pre-load and so forth are present simultaneously, surface originating flaking may occur after a very short period of use due to poor lubrication (lack of oil film) at the inner raceway surface that is under high contact pressure.

The conventional techniques envisaged for increasing the lifetime of tapered roller bearings are all concerned about configurations or shapes, especially of crowning, whereas no special study has been made on absolute values of maximum contact pressure (see Japanese Patent Laid-Open Publication No. 2000-235749, Japanese Utility-Model Laid-Open Publication No. Hei 5-22845, Japanese Utility-Model Registration No. 2554882, and Japanese Patent Laid-Open Publication No. 2001-3941).

The present inventor has found, as the results of experiments, the incidence rate of surface originating flaking is not determined depending on the edge stress but determined depending on the maximum contact pressure that varies depending on the crowning shape or internal design of the bearing.

Nonetheless, according to the conventional techniques, the designing of the crowning or bearing interior has been mostly made so as to equalize the distribution of contact pressure for the main purpose of preventing the decrease of lifetime due to edge stress. Therefore, the problem of surface originating flaking caused by the maximum contact pressure on raceway surfaces has been left unsolved.

Very early surface originating flaking caused by poor lubrication occurs when loss in pre-load arises under severe lubricating conditions. This is because the load distribution is made small (load range is made narrow) in the interior of the bearing by the loss in pre-load. As a result of the experiments, the present inventor has found that, as described below, the threshold value of maximum contact pressure for early surface originating flaking to occur is 3000 MPa, and has achieved the present invention based on this finding.

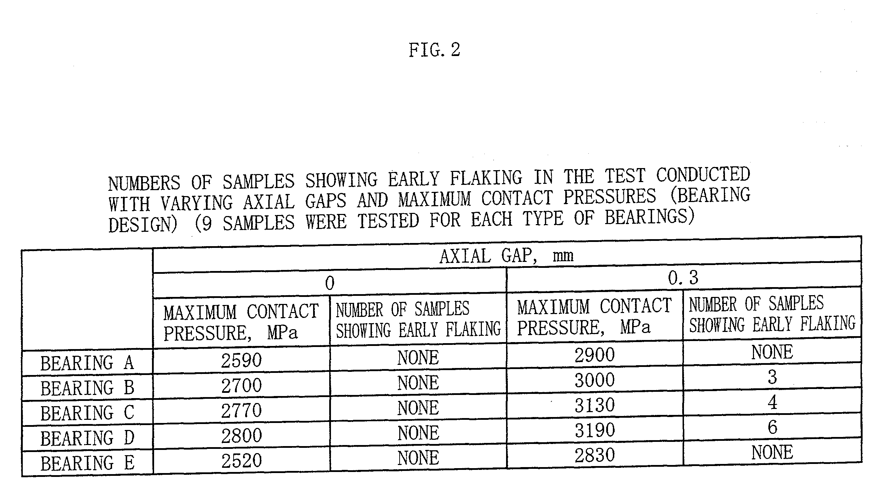

Fig. 2 shows the results of tests which were conducted on nine samples each of five types of bearings A to E, and the number of samples which caused early flaking due to loss in pre-load was counted. The interiors of the bearings were designed differently from one another so that the respective types of the bearings had different numbers of rollers with different lengths and diameters from one type to another and hence different maximum contact pressures. Columns on the left from the center indicate the results under the conditions where the axial clearance was 0 mm and pre-load barely existed, while columns on the right from the center indicate the results under the conditions where the axial clearance was 0.3 mm and the pre-load had been lost completely. The bearing E had the same interior design as that of the bearing B, but the crowning shape was extremely smaller (the curvature radius was larger) than that of the bearing B.

As seen from Fig. 2, early flaking (after 15 hours or less of use) occurred as soon as the maximum contact pressure reached 3000 MPa, and the number of bearing samples suffering from early flaking increased as the contact pressure became higher than 3000 MPa. It was also confirmed that the lifetime of the bearings not suffering from early flaking was at least ten times longer than the average lifetime of 15 hours of the bearings which caused early flaking.

Note that the test conditions in Fig. 2 were as follows: the dimensions of the bearings A to E were φ 45mm × φ81 mm × 16 mm, the material of the bearings was carbonized steel, the rotational speed was 2500 rpm, and the applied load was 19.1 kN.

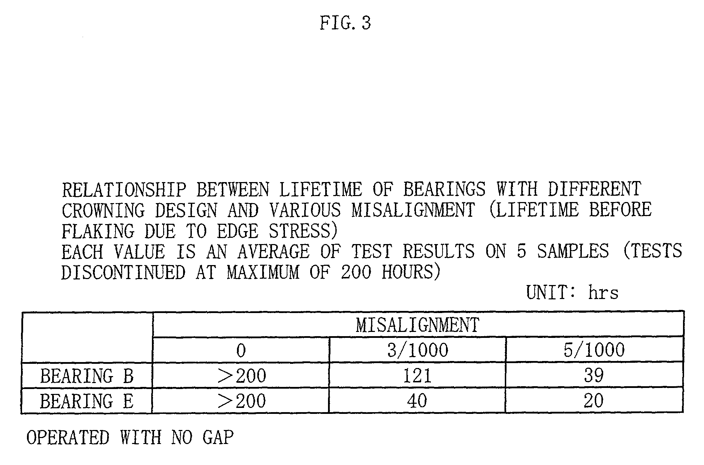

As shown in Fig. 3, for the bearing E having a small crowning, the lifetime dropped acutely due to edge stress as the assemble error became larger (200 hours → 40 hours → 20 hours), whereas for the bearing B having a larger crowning, the lifetime did not drop so much as the bearing E (200 hours → 121 hours → 39 hours). Further, with the assemble error of not more than 3/1000, both the bearing B and bearing E showed longer lifetime than the lifetime (15 hours) when causing early surface originating flaking as shown in Fig. 2 (the decrease of lifetime due to edge stress can also be determined by calculation).

The lubricating conditions used in the tests of Figs. 2 and 3 were as follows: the type of oil was of VG 1.5 Grade, oil temperature was about 90°C (natural rise), and the level of oil was at the level of the shaft center.

It should be noted that the tests of the Figs. 2 and 3 were conducted under the conditions of the oil film parameter Λ being 0.2 in order to enhance the reproducibility of the problem. As seen from Fig. 4, early flaking occurred when the oil film parameter Λ was less than 0.6.

In other words, under severe lubricating conditions with the oil film parameter Λ being less than 0.6, it is possible to prevent the early occurrence of the surface originating flaking due to poor lubrication by providing crowning or designing the interior of the bearing appropriately such that the maximum contact pressure on the raceway surfaces is less than 3000 MPa even when loss in pre-load is caused by increase in applied load or temperature.

In these tests, the oil film parameter was used as the parameter for representing levels of poor lubrication and each test was performed under the conditions where a sufficient amount of lubricating oil was present. On the other hand, it was also found that, even if the speculative oil film parameter was 0.6 or greater, damages such as surface flaking would occur when the amount of lubricating oil became low. It is believed that this is because lack of oil film occurs locally due to the insufficient amount of lubricating oil. It is known that tapered roller bearings for transmissions having an inner diameter of about φ20 to φ45 mm tend to cause a trouble attributable to poor lubrication when the feed rate of lubricating oil drops to about 100 mL/min or less. For this reason, it is believed that the case of poor lubrication with the feed rate of lubricating oil of about 100 mL/min or less should also be treated likewise as the case with Λ being equal to or less than 0.6. It is known that the oil film thickness becomes larger in proportion to the kinematic viscosity of the lubricating oil (the oil film thickness becomes larger also in proportion to rotational speed). If the oil film parameter Λ of a tapered roller bearing used in an automobile transmission is equal to or less than 0.6, for example, the kinematic viscosity of the lubricating oil during operation is equivalent to about 10 cst or less, and such tapered roller bearing will be able to operate satisfactorily with low-viscosity oil that has recently been employed for realizing automated transmissions, CVTs, fuel economy, and so forth.

### SUMMARY OF THE INVENTION

In view of the circumstances as described above, an object of the present invention is to provide a bearing which is provided with crowning or has the interior designed so as to be capable of preventing the bearing being broken after a very short period of use, by seeking a balance between the decrease of life caused by fatigue due to edge stress and the lifetime before the very early occurrence of surface originating flaking due to poor lubrication (affected by the magnitude of maximum contact pressure), so that the early occurrence of flaking can be prevented even when loss in pre-load has occurred under severe lubricating conditions.

The present invention relates to a tapered roller bearing for an automobile transmission wherein the maximum contact pressure on raceway surface is rendered less than 3000 MPa under the conditions where loss in pre-load has occurred.

According to the present invention, since the maximum contact pressure on the raceway surface of the tapered roller bearing for an automobile transmission is set less than 3000 MPa, the early occurrence of surface originating flaking can be prevented effectively even if loss in pre-load has occurred under severe lubricating conditions where the oil film parameter is less than 0.6 or the lubricating oil feed rate is less than 100 mL/min.

### BRIEF DESCRIPTION OF THE DRAWINGS

Fig. 1(a) is a sectional view of a tapered roller bearing;
Fig. 1(b) is an enlarged view of a tapered roller;
Fig. 2 is a diagram showing results of tests on early flaking due to loss in pre-load;
Fig. 3 is a diagram showing results of tests on early flaking due to misalignment; and

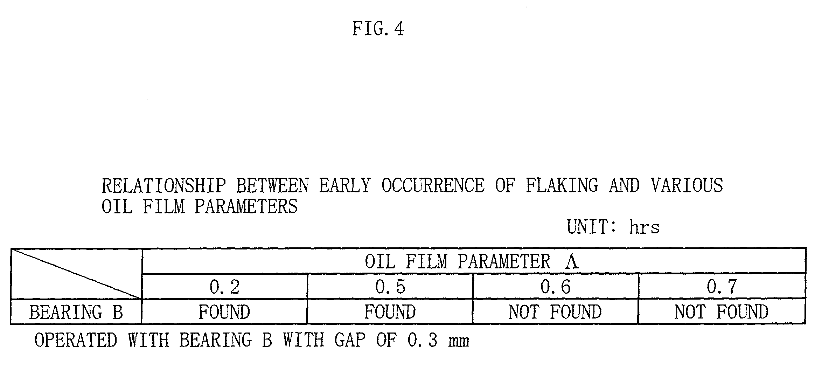

Fig. 4 is a diagram showing results of tests on early flaking due to difference in oil film parameter values.

### DETAILED DESCRIPTION OF THE PREFERRED EMBODIMENTS

A tapered roller bearing for automobile transmissions according to this invention is constructed such that maximum contact pressure on a raceway surface is kept less than 3000 MPa even when loss in pre-load has occurred. According to a conventional method of designing crowning, its principal object is to suppress edge stress. If the maximum contact pressure on a raceway surface exceeds 3000 MPa, the edge stress will increase due to misalignment, and consequently surface originating flaking will occur due to the maximum contact pressure on the raceway surface earlier before the bearing reaches its flaking time. Therefore, according to such conventional method of designing crowning, the lifetime the bearings are allowed to have is relatively short. It is therefore more desirable that a tapered roller bearing for an automobile transmission be designed such that the maximum contact pressure on a raceway surface is kept less than 3000 MPa even when loss in pre-load has occurred. More specifically, in order to keep the maximum contact pressure less than 3000 MPa under the condition where loss in pre-load has occurred, crowning with predetermined configurations is provided on the raceway surface 1 or 3 or on the outer peripheral surface of the tapered roller 7 in Fig. 1, or the interior of the bearing is designed appropriately (in terms of the diameter, length, and number of rollers), on the basis of applied load.

## Claims

1. A tapered roller bearing for an automobile transmission, wherein a maximum contact pressure on a raceway surface (1, 3) is kept less than 3000 Mpa under a condition where loss in pre-load has occurred.

2. A tapered roller bearing according to claim 1, wherein on said raceway surface (1, 3) or outer peripheral surface of tapered rollers (7) of said bearing, crowning is provided so as to keep said maximum contact pressure.
